# EUROPÄISCHE PATENTSCHRIFT

(11) **EP 1 560 733 B1**
(45) Veröffentlichungstag und Bekanntmachung des Hinweises auf die Patenterteilung: **14.06.2006**
(21) Anmeldenummer: 04720857.4
(22) Anmeldetag: 16.03.2004
(51) Int. Cl.: B60R 21/34

(54) **EINRICHTUNG ZUM MANUELLEN REVERSIEREN EINER VORRICHTUNG ZUM SCHUTZ VON PERSONEN BEI EINEM FRONTALAUFPRALL AUF EIN KRAFTFAHRZEUG**
DEVICE FOR MANUALLY REVERSING A DEVICE IN ORDER TO PROTECT PASSENGERS IN A HEAD-ON COLLISION IN A MOTOR VEHICLE
DISPOSITIF POUR REMETTRE MANUELLEMENT UN SYSTEME DE PROTECTION DES PERSONNES DANS SA POSITION INITIALE APRES UN CHOC FRONTAL SUR UN VEHICULE AUTOMOBILE

(30) Priorität: 22.05.2003 DE 10323118
(43) Veröffentlichungstag der Anmeldung: 10.08.2005
(73) Patentinhaber: ISE Innomotive Systems Europe GmbH, 51702 Bergneustadt (DE)
(72) Erfinder: BORCHERT, Andreas, 51702 Bergneustadt (DE); HARTEBRODT, Raphael, 57489 Drolshagen (DE); LANG, Jozsef, H-1131 Budapest (HU); MENDEL, Erich, 51702 Bergneustadt (DE); MIKA, Frank, 51588 Nümbrecht (DE); REX, Martin, 51570 Windeck (DE)
(74) Vertreter: Fuchs Mehler Weiss & Fritzsche
(86) Internationale Anmeldenummer: PCT/EP2004/002686
(87) Internationale Veröffentlichungsnummer: WO 2004/103780

(56) Entgegenhaltungen:
- DE-A- 10 116 716
- US-B1- 6 293 362
- PATENT ABSTRACTS OF JAPAN vol. 1998, no. 04, 31. März 1998 (1998-03-31) -& JP 09 315266 A (MITSUBISHI MOTORS CORP), 9. Dezember 1997 (1997-12-09)

## Beschreibung

Die Erfindung bezieht sich auf eine Einrichtung gemäß dem Oberbegriff des Anspruches 1, siehe EP-A-1 238893.

Jährlich ereignen sich zahlreiche Unfälle, bei denen Fußgänger, Skater oder Zweiradfahrer, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper einer erwachsenen Unfallperson gefährdet, da dieser bei einem Zusammenprall mit dem Kraftfahrzeug - wie Crash-Versuche und auch die praktischen Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es sind eine Reihe von Möglichkeiten zur Lösung dieses Problems bekannt geworden, wie ein vor der Windschutzscheibe liegendes netzartiges Auffangelement oder ein im Aufprallfall sensorgesteuert aufblasbarer Luftsack im Übergangsbereich zwischen Windschutzscheibe und Frontscheibe.

Die DE 28 14107 A in Verbindung mit der DE 28 41 315 zeigt ein anderes Lösungsprinzip zur Verringerung der Verletzungsgefahr beim Aufprall von Personen auf die Fronthaube, das auf der Überlegung beruht, das im fahrtrichtungsabgewandten hinteren Bereich der Fronthaube liegende, relativ harte und unnachgiebige Aufschlaggebiet wesentlich zu entschärfen. Dies wird durch eine mittels eines Aufprall-Sensors betätigte Vorrichtung zur Verstellung der Fronthaube aus einer Ruheposition in eine demgegenüber angehobene, nachgiebige Aufprallposition, d.h. durch eine sogenannte "aktive Fronthaube" bewirkt. Dadurch, dass die Fronthaube bei der von dem Aufprall-Sensor erfassten Kollision mit einer Person in eine gegenüber ihrer Ruhe - d.h. Normalfallstellung angehobene Aufpralistellung nachgiebig aufgestellt wird, wird ein Abstand der Fronthaube zur steifen Unterstruktur des Fahrzeuges (Motor etc.), d.h. ein beim Brust- oder Kopfaufprall der Person im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Für das "aktive" Aufstellen der Fronthaube sind eine Reihe von konstruktiven Möglichkeiten mit unterschiedlichen Antriebsarten bekannt geworden.

So zeigt die DE 197 12 961 A1 einen Aufprallschutz durch eine "aktive Fronthaube", die windschutzscheibenseitig über eine Scharnieranordnung drehbar angeschlagen ist. Diese Scharnieranordnung ist mittelbar über einen schwenkbar oder verschiebbar gelagerten Scharnierträger so an der Karosserie des Vorderwagens befestigt, dass im Kollisionsfall die Fronthaube sensorgesteuert mittels einer an dem Scharnierträger angreifenden energiespeichernden Einrichtung, vorzugsweise einem Feder-Kraftspeicher, nach oben verschwenkt bzw. verschoben, d.h. angehoben werden kann.

Dieser bekannten Konstruktion liegt der Gedanke zugrunde, die Scharnieranordnung selbst mit dem angelenkten Scharnierträger gegenüber der Karosserie anzuheben, so dass es nicht notwendig ist, eine komplexe Entkoppeleinrichtung zwischen Scharnieranordnung und Fronthaube im Falle eines Aufpralles vorzusehen.

Bei diesem derartigen aktiven Personen-Aufprallschutzsystem kann die Aufstellung der Fronthaube infolge der hohen Empfindlichkeit der Sensorik auch bei einer leichten Kollision mit festen Gegenständen oder bei einer Kollision ohne Beschädigung am Fahrzeug ausgelöst werden. Sie muß dann vom Fahrzeugführer bzw. -führerin problemlos in die Ausgangslage zurückverlagert, d.h. reversiert werden. Das gleiche gilt für Auslösungen zu Test- oder Inspektionszwecken.

Zu dem Reversieren, das zur Begrenzung des Aufwandes typischerweise manuell durchgeführt wird, können zusätzliche, angepasste Werkzeuge vorgesehen werden, die eine mechanische Verstärkung der Handkraft bewirken, da diese allein nicht ohne weiteres ausreicht, um den aufgestellten Scharnierträger gegen die hohe Kraft des Feder-Kraftspeichers niederzudrücken, zumal die beidseitigen Scharnierträger bei großen Aufstellhüben möglichst gleichzeitig niedergedrückt werden sollen, um Verwindungen der großflächigen Fronthaube zu vermeiden.
Die entsprechenden Werkzeuge müssen, wie das Reserverad, ständig griffbereit mitgeführt werden, was als lästig empfunden wird. Zudem besteht die Gefahr, dass die Werkzeuge verloren gehen.

Die DE 101 11 096 A1 (= EP 1 238 893 A1) zeigt eine Einrichtung zum manuellen Reversieren der aktiven Personen-Aufprallschutzvorrichtung ohne Werkzeuge unter Benutzung der Fronthaube als Hebel. Es sind verschiedene Ausführungsformen eines Mechanismus offenbart, der nach dem Öffnen der Fronthaube in die übliche, sogenannte Servicestellung einen weiteren Anlenkpunkt der Fronthaube an der Karosserie des Vorderwagens schafft, wobei der Abschnitt der Fronthaube zwischen diesem zusätzlichen Anlenkpunkt und der Haubenvorderkante, an der die Handkraft wirkt, als langer Hebel für das Rückstellen der Aufprallschutzvorrichtung durch Aufstellen der Fronthaube über die Servicestellung hinaus dienen kann.

Dieses Prinzip erlaubt eine nutzerfreundliche Reversierung ohne zusätzliche Werkzeuge aufgrund prinzipiell gewohnter Vorgänge (Aufstellen der Fronthaube).

Die vorgenannte Schrift zeigt verschiedene Möglichkeiten für die Ausbildung dieses den weiteren Anlenkpunkt schaffenden Mechanismus, z.B. in Form einer Kulissenführung der Hinterkante der Vorderhaube, was jedoch die Gefahr einer Beschädigung der Hinterkante in sich birgt. Als besonders elegante Möglichkeit wird die Ausführung des Mechanismus durch eine Hauben-Öffnungshilfe in Form einer Gasdruckfeder beschrieben, die vor der Scharnieranordnung an Fronthaube und Karosserie angelenkt ist und im vollständig geöffneten Zustand als starrer Gelenkarm mit der Anlenkung der Gasdruckfeder an der Fronthaube als Hebelarm bei weiterer Öffnung der Fronthaube fungiert. Der Abschnitt zwischen Anlenkung und Hinterkante dient dann als kurzer Hebelarm, der auf die Scharnieranordnung und damit auf den aufgestellten Scharnierträger drückt. Diese Variante ist jedoch nur anwendbar bei Kraftwagen mit einer entsprechenden Öffnungshilfe. Sie hat ferner den entscheidenden Nachteil, dass die Aufstellbewegung des Scharnierträgers im Crash-Fall durch die Öffnungshilfe dämpfend, d.h. verzögernd beeinträchtigt wird, was im Interesse der Sicherheit nicht hinnehmbar ist, der eine Aufstellbewegung im Millisekunden-Bereich notwendig ist.

Bei einer dritten Ausführungsform greift der Mechanismus in Form einer speziellen Hebelkonstruktion in eine speziell gestaltete Scharnieranordnung ein, was u.a. die Konstruktion einer speziellen Scharnieranordnung notwendig macht.

Der Erfindung liegt die Aufgabe zugrunde, die eingangs bezeichnete Einrichtung zum manuellen Reversieren einer Vorrichtung zum Schutz von Personen bei einem Frontalaufprall auf ein Kraftfahrzeug so auszubilden, dass sie unabhängig von der Ausbildung der Scharnieranordnung und auch bei Wagen ohne Öffnungshilfe einsetzbar ist, keinen verzögernden Einfluß auf die Aufstellung der Schutzvorrichtung hat und von ihr keine Gefahr für eine Beschädigung der Fronthaube ausgeht.

Die Lösung dieser Aufgabe gelingt gemäß der Erfindung durch eine Einrichtung gemäß Anspruch 1, insbesondere eine Einrichtung zum manuellen Reversieren einer Vorrichtung zum Schutz von Personen bei einem Frontalaufprall auf ein Kraftfahrzeug, welches eine den Vorderwagen abdeckende Fronthaube aufweist, die windschutzscheibenseitig an beiden Fahrzeugseiten jeweils über ein Scharnier mittelbar drehbeweglich an der Karosse des Vorderwagens angelenkt ist, indem das Scharnier jeweils auf einem Scharnierträger angelenkt ist, der seinerseits in der Schutz-Vorrichtung, die karosseriefest angebracht ist, und einen Federspeicher in Verbindung mit einer sensorgesteuert auslösbaren Haltevorrichtung aufweist, aufstellbar angebracht ist, derart, dass im Normalzustand der Scharnierträger niedergehalten ist und im Kollisionsfall sensorbetätigt für eine begrenzte Aufstellbewegung unter Anhebung der Fronthaube im Scharnierbereich freigebbar ist, wobei die Reversier-Einrichtung ein fest montiertes Revers-Element in Form eines verzögerungsfrei auf eine vorgegebene Länge ausziehbaren Zug-Stabes aufweist, welches im Scharnierbereich einerseits an der Fronthaube und andererseits karosseriefest drehbeweglich angelenkt ist, derart, dass bei Erreichen eines vorgegebenen Öffnungswinkels der Fronthaube der Zug-Stab seine maximale Auszugslänge erreicht und beim weiteren Öffnen der Fronthaube der Anlenkpunkt des Zug-Stabes an der Fronthaube einen neuen Drehpunkt für die Fronthaube bildet, und durch Nutzung der Fronthaube als zweiarmigen Hebel unter Einleiten einer Handkraft am vorderen langen Hebel und Erzeugen einer Wirkkraft am scharnierseitigen kurzen Hebelarm ein aufgestellter Scharnierträger und damit die ausgelöste Schutz-Vorrichtung reversierbar ist.

Durch den verzögerungsfrei ausziehbaren Zug-Stab ist gewährleistet, dass durch ihn kein verzögernder Einfluß auf die Aufstellbewegung der Schutz-Vorrichtung ausgeht. Da beim manuellen Reversieren unter Benutzung der Fronthaube als Hebelarm diese mittelbar über die Scharnieranordnung die Schutz-Vorrichtung zurückstellt, besteht keine Gefahr für eine Beschädigung der Fronthaube. Außerdem ist die Reversierung dadurch von der speziellen Konstruktion des Scharniers unabhängig.

Ausgestaltungen der Erfindung sind in Unteransprüchen gekennzeichnet und ergeben sich zudem aus der Figurenbeschreibung.

Anhand von in den Zeichnungen in verschiedenen Ansichten und Zuständen dargestellten Ausführungsbeispielen wird die Erfindung näher beschrieben.

Es zeigen:
- Fig. 1: in einer schematisierten Seitenansicht den Scharnierbereich der Anlenkung einer Fronthaube eines Kraftfahrzeuges, mit einem Scharnier, das auf einem Scharnierträger befestigt ist, der aufstellbar in einer Unfall-Schutzvorrichtung geführt ist, sowie mit einer ersten Ausführungsform des erfindungsgemäßen Revers-Zugstabes in Gestalt einer Doppellasche mit Langloch in der Grundstellung,
- Fig. 2: den näheren Aufbau der Doppellasche nach Fig. 1, in einer isometrischen Darstellung im Figurenteil A und einer axialen Querschnitt-Ansicht im Figurenteil B,
- Fig. 3: den Scharnierbereich nach Fig. 1 im aufgestellten Zustand der Unfall-Schutzvorrichtung,
- Fig. 4: den Scharnierbereich nach Fig. 1 im nicht aufgestellten Zustand der Unfall-Schutzvorrichtung beim Öffnen der Fronthaube in die normale Servicestellung,
- Fig. 5: den Scharnierbereich nach Fig. 1 im aufgestellten Zustand der Unfall-Schutzvorrichtung bei einem weiteren Öffnen der Fronthaube über die Stellung nach Fig. 4 hinaus, unter Rückstellung des Scharnierträgers der Unfall-Schutzvorrichtung,
- Fig. 6: den vorgenannten Scharnierbereich in der 90°-Werkstattstellung der Fronthaube mit vollständig reversierter Unfall-Schutzvorrichtung,
- Fig. 7: in einer Darstellung des Scharnierbereiches nach Fig. 1 eine zweite Ausführungsform des erfindungsgemäßen Zug-Stabes in Form einer einteiligen Lasche mit Langloch,
- Fig. 8: in einer Darstellung des Scharnierbereiches nach Fig. 1 eine dritte Ausführungsform des erfindungsgemäßen Revers-Zugstabes mit einer faltbaren Doppellasche im Grundzustand,
- Fig. 9: die Einrichtung nach Fig. 8 im sensorgesteuert aufgestellten Zustand der Unfall-Schutz-Vorrichtung,
- Fig. 10: die Einrichtung nach Fig. 9, jedoch mit geöffneter Fronthaube bei gestreckter Zug-Doppellasche am Beginn des Reversiervorganges,
- Fig. 11: die Einrichtung nach Fig. 10 mit weiter geöffneter Fronthaube und teilweiser Reversierung der Schutz-Vorrichtung,
- Fig. 12: die Einrichtung nach Fig. 10 in der 90°-Stellung der Fronthaube und vollständig reversierter Schutz-Vorrichtung,
- Fig. 13: in einer Darstellung des Scharnierbereiches nach Fig. 1 eine vierte Ausführungsform des erfindungsgemäßen Revers-Zugstabes in Form einer Gasdruckfeder mit Auslöseschloß im Grundzustand,
- Fig. 14: die Einrichtung nach Fig. 13 im sensorgesteuert aufgestellten Zustand der Unfall-Schutzvorrichtung und ausgelöster Gasdruckfeder,
- Fig. 15: die Einrichtung nach Fig. 14 wenige Sekunden nach der Auslösung mit wieder verriegelter Gasdruckfeder,
- Fig. 16: die Einrichtung nach Fig. 15 mit geöffneter Fronthaube und vollständig ausgefahrener Gasdruckfeder am Beginn des Reversiervorganges,
- Fig. 17: die Einrichtung nach Fig. 16 mit weiter geöffneter Fronthaube und teilweiser Reversierung der Unfall-Schutz-Vorrichtung, und
- Fig. 18: die Einrichtung nach Fig. 17 mit der 90°-Stellung der Fronthaube und vollständig reversierter Schutzvorrichtung.

Bevor auf die Figuren im einzelnen eingegangen wird, soll nochmals kurz der Hintergrund der Erfindung dargestellt werden.

Wie eingangs erwähnt, sind heute in der Automobil-Industrie Bestrebungen im Gange, Kraftfahrzeuge so auszubilden, dass im Fall eines drohenden Zusammenpralls eines Kraftfahrzeuges mit einer Person die Motorhaube im windschutzseitigen Scharnierbereich durch eine sensorgesteuerte, die Scharnieranordnung tragende Aufstellvorrichtung um einen vorgegebenen Hub angehoben wird ("aktive Motorhaube"). Im Fall einer nicht unfallbedingten Aufstellung muß die Aufstellvorrichtung vom Fahrzeugführer manuell reversiert werden können. Verwendet man die Fronthaube des Kraftfahrzeuges als Hebelarm, in Verbindung mit einem fest eingebauten axial ausziehbarem Reverselement, kann die Aufstell-Vorrichtung mit einer üblichen Bewegung der Fronthaube ohne weitere Werkzeuge reversiert werden. Das Reverselement ist zwischen der Karosse des Vorderwagens einerseits und der Fronthaube andererseits gelenkig, aber axial begrenzt eingebaut. Das Reverselement ist längenmäßig so abgestimmt, dass es einerseits beim normalen Öffnen der Fronthaube (die typischerweise die Motorhaube ist) in die sogenannte ServiceStellung unter Zugbeanspruchung die maximale Ausziehlänge erreicht und dabei inaktiv bleibt, d.h. das Öffnen der Fronthaube insoweit ohne Beeinträchtigungen zulässt, sowie dass es andererseits, nachdem es seine volle Ausziehlänge erreicht hat, als starrer Hebelarm mit einem neuen Drehpunkt der Fronthaube wirkt und damit bei einem weiteren Aufstellen der Motorhaube in die vertikale Werkstattstellung über die Scharnieranordnung einen aufgestellten Scharnierträger, d.h. die zugehörige Aufstell-Vorrichtung, reversieren kann. Die Erfindung sieht als Reverselement ein ungedämpftes, d.h. verzögerungsfrei axial ausziehbares stabförmiges Bauteil vor. Unter einem "Stab" versteht man nach der mechanischen Fertigkeitslehre generell einen geraden oder gekrümmten langen Körper von annähernd gleichbleibendem Querschnitt und hinreichender Steifigkeit um Kräfte aufnehmen oder übertragen zu können. Da im vorliegenden Fall das Reverselement beim Öffnen der Fronthaube auf Zug beansprucht wird, wird im folgenden von einem "Zug-Stab" gesprochen.

Für die konstruktive Gestaltung dieses ungedämpft ausziehbaren Zug-Stabes sind mehrere Varianten möglich, von denen einige typische Beispiele in den Figuren dargestellt sind.

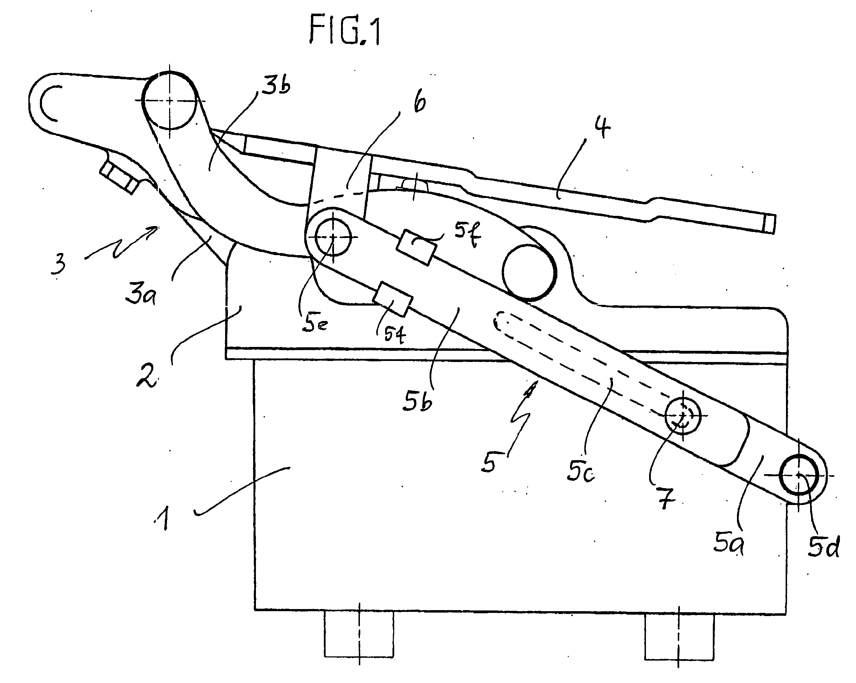

In den Figuren 1 bis 6 ist eine erste Variante des Zug-Stabes in Form einer zweigeteilten Zug-Lasche (Doppellasche) mit Langloch dargestellt.

Diese Figuren zeigen ein Gehäuse 1, das fahrzeugfest an der Karosse des Vorderwagens eines Kraftfahrzeuges angebracht ist, und das einen aufstellbaren Gehäusedeckel 2 besitzt. In diesem Gehäuse 1 ist eine Schutz-Vorrichtung zum aktiven Aufstellen der Fronthaube untergebracht. Diese Schutz-Vorrichtung besteht typischerweise aus einem sensorgesteuert auslösbaren Federspeicher mit entsprechenden Aufstellvorrichtungen 1 a, beispielsweise in Form einer Schere oder eines Teleskops, um den Gehäuse-Deckel 2 im Gefahrenfall um einen vorgegebenen Hub aufstellen zu können. Prinzipiell können alle SchutzVorrichtungen insoweit Anwendung finden. Der Gehäusedeckel 2 ist gleichzeitig als Scharnierträger ausgebildet, d.h. an ihm ist karosserieseitig eine Scharnieranordnung 3 für die übliche Verschwenkung der Fronthaube des Kraftfahrzeuges befestigt. Im vorliegenden Beispiel ist ein 4-Gelenk-Scharnier mit den Scharnier-Stangen 3 a, 3 b dargestellt, die mit einem Ende an dem Scharnierträger 2 drehbeweglich angelenkt sind, und deren andere Enden an einem Scharnierflansch 4, der zur Aufnahme der Fronthaube dient, bzw. an seinem seitlich abgestellten Teil drehgelenkig angekoppelt sind.

Prinzipiell können auch anders konstruierte Scharnieranordnungen angewendet werden. Die Erfindung ist davon unabhängig.

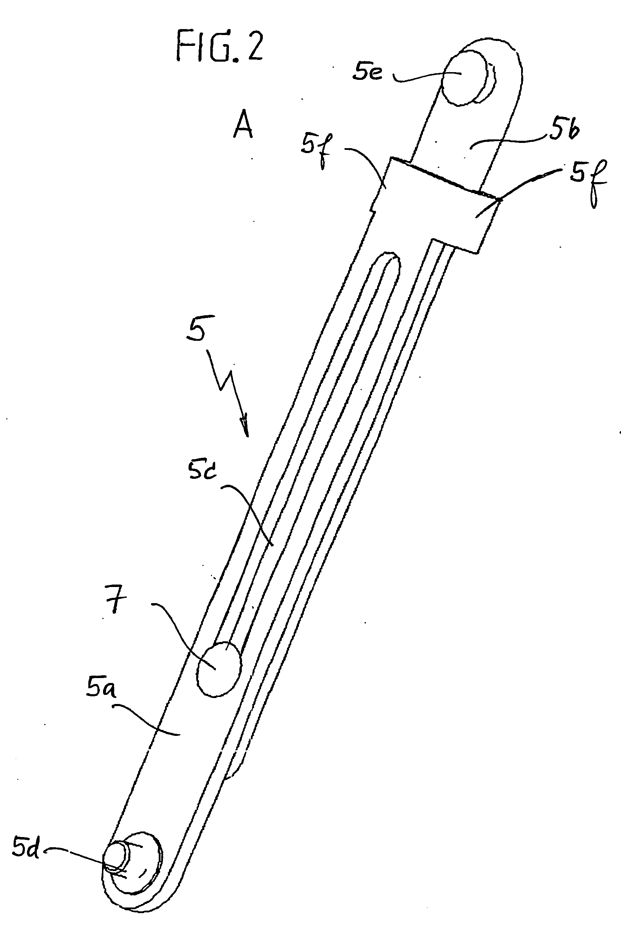

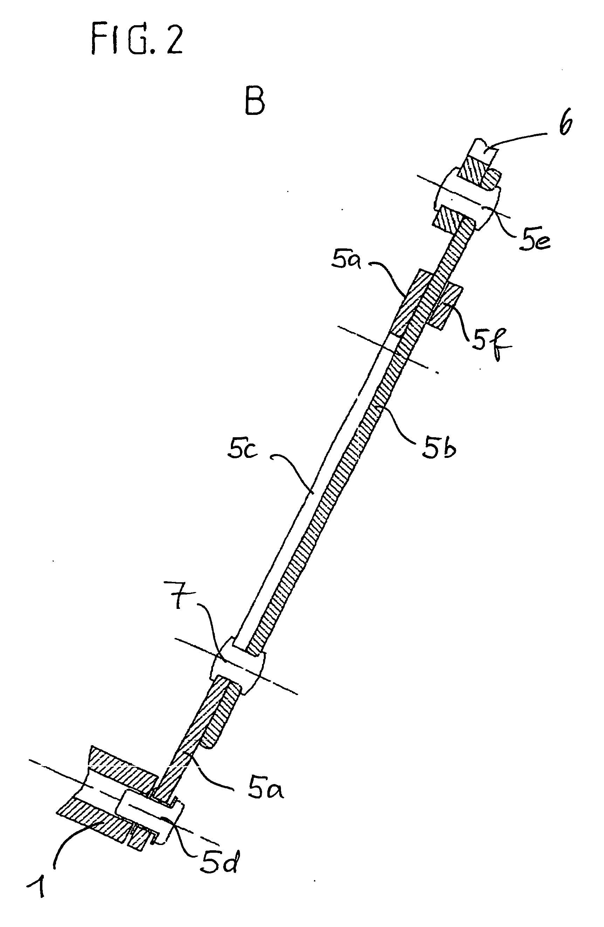

Als Reverselement ist ein Zug-Stab vorgesehen, der durch eine zweigeteilte Zug-Lasche 5 mit Langloch gebildet ist, und der in Fig. 2 als Einzelkomponente näher dargestellt ist.

Die Zug-Lasche 5 weist zwei, jeweils aus einem streifenförmigen Flachmaterial bestehende Laschenteile 5 a, 5 b auf, von denen der untere Laschenteil 5 a ein Langloch 5 c aufweist und karosseriefest mit einem Zapfen 5 d angelenkt ist, und von denen der obere Laschenteil 5 b mittels eines Zapfens 5 e an einem Befestigungswinkel 6 des Scharnierflansches 4 drehbeweglich angelenkt ist. Mittels eines Bolzens 7 oder Niete, Schraube oder dergleichen, der das Langloch 5 c durchdringt, ist das obere Laschenteil 5 b verschiebbar im unteren Laschenteil 5 a aufgenommen. Zwei Falze 5 f am oberen Ende des unteren Laschenteils 5 a umfassen das obere Laschenteil 5 b, d.h. halten beide Laschenteile zentriert zusammen, so dass eine lineare, axiale Verschiebung der Laschenteile 5 a, 5 b zueinander gewährleistet ist.

Die dargestellte Reversiereinrichtung in Form der dargestellten Zuglasche 5 arbeitet wie folgt:

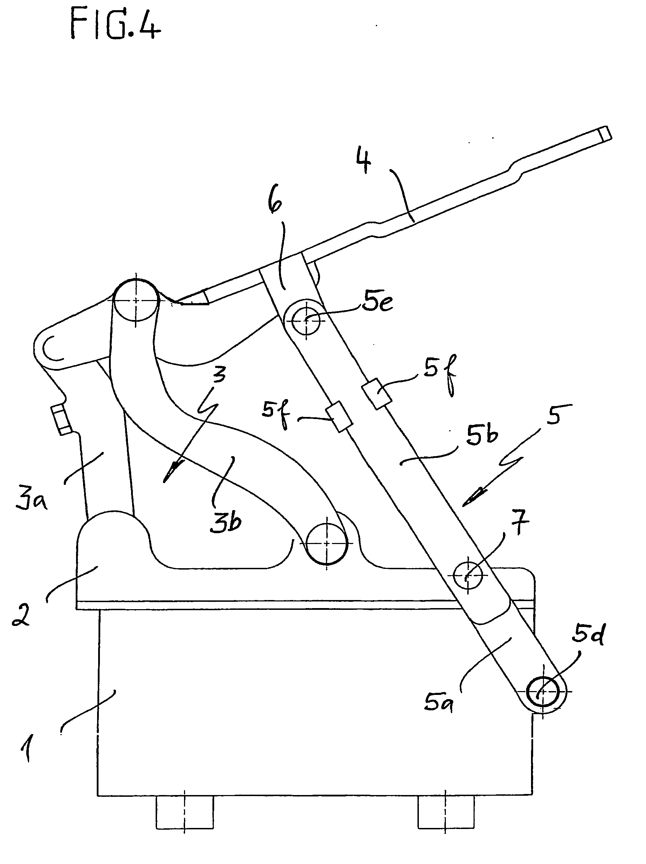

In der Grundstellung nach Fig. 1, d.h. bei geschlossener Haube, aber auch beim normalen Öffnen der Haube zu Service-Zwecken nach Fig. 4, hat die Zuglasche 5 keine Funktion und ist axial sowie um die Achse 5 d und 5 e frei beweglich.

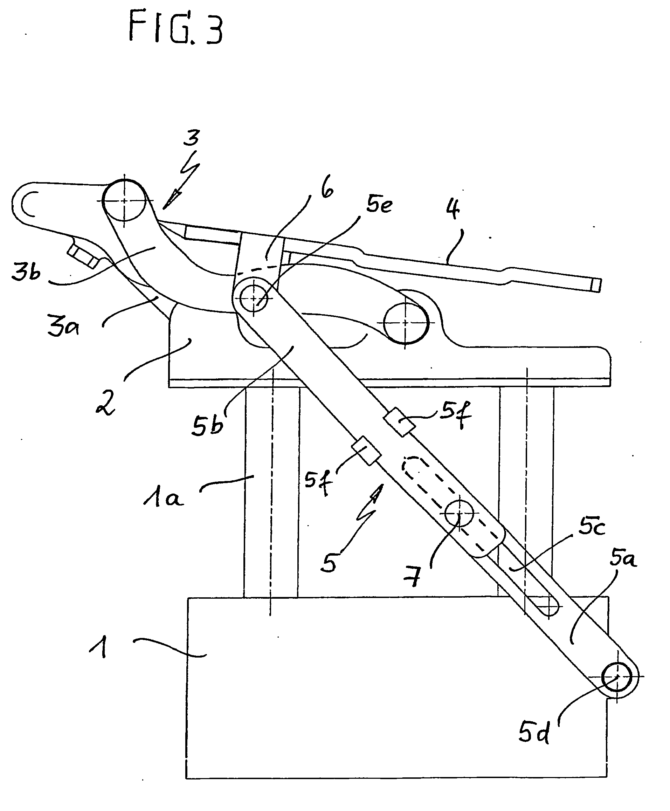

Erkennt die Sensorik der Schutzvorrichtung einen drohenden Unfall, wird der Scharnierträger 2 samt Scharnieranordnung 3 und damit auch die Fronthaube im hinteren Teil mittels der Aufstellelemente 1 a aus der Grundstellung nach Fig. 1 um einen vorgegebenen Hub aufgestellt. Dieser Zustand ist in Fig. 3 dargestellt. Die Zuglasche 5 wird dabei verzögerungsfrei um eine vorgegebene Strecke ausgezogen und auch die Achsen 5 d und 5 e gewährleisten eine freie Beweglichkeit, die den Aufstellvorgang nicht beeinträchtigen.

Erfolgt jedoch kein Aufprall auf die Fronthaube, ist ein manuelles Reversieren der Schutzvorrichtung vor Ort durch den Fahrzeugführer sinnvoll, um eine Weiterfahrt ohne Sicht-Beeinträchtigung zu gewährleisten.

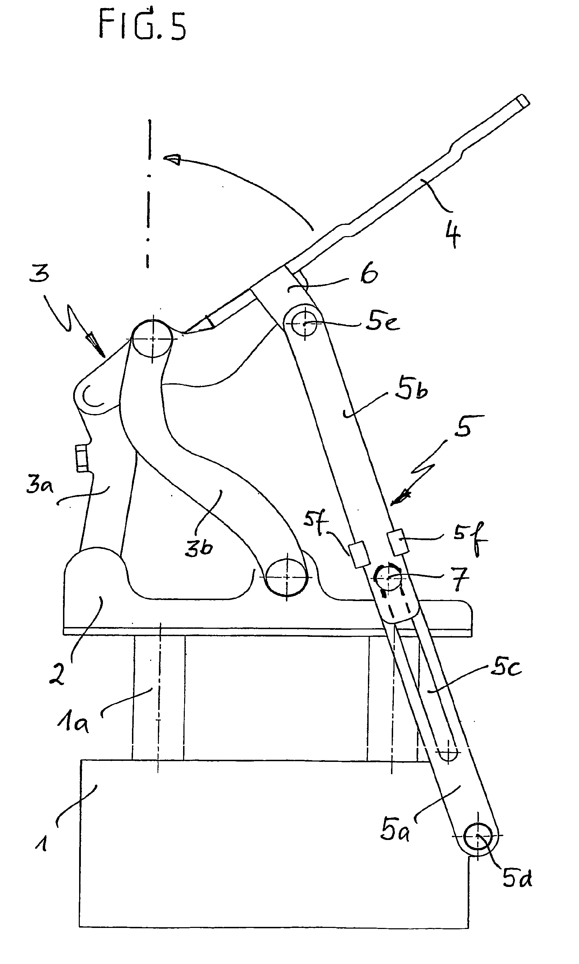

Dazu wird das Fronthaubenschloß geöffnet und die Fronthaube zunächst so weit geöffnet, bis die Zuglasche 5 auf ihre maximale Länge ausgezogen ist, d.h. der Bolzen 7 mit dem oberen Ende des Langloches 5 c zur Anlage kommt. Diesen Zustand zeigt die Fig. 5.

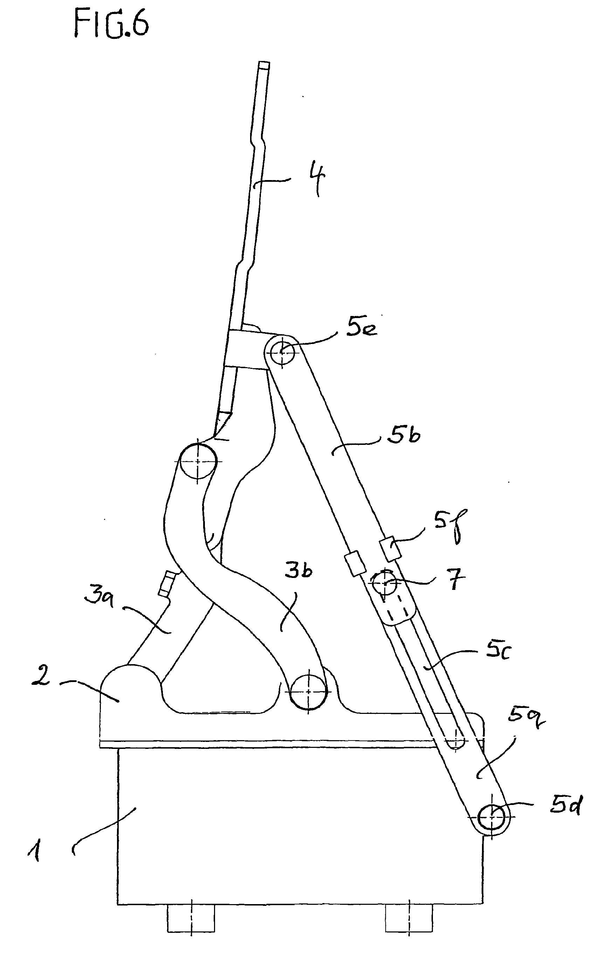

Jetzt beginnt der eigentliche Reversiervorgang dadurch, dass die Fronthaube unter Anwendung einer höheren Handkraft weiter in Pfeilrichtung nach Fig. 5 aufgestellt wird, bis eine ca. 90°-Stellung gemäß Fig. 6, die sogenannte Werkstattstellung, erreicht ist.

Da aber bereits in der Stellung nach Fig. 5 die maximale Auszugslänge der Zuglasche erreicht ist, andererseits der Scharnierträger 2 federbelastet nahezu am hinteren Endpunkt der Fronthaube über das dort angelenkte Scharnier angreift, bildet sich am Anlenkpunkt 5 e der Zuglasche 5 ein neuer Drehpunkt für die Fronthaube mit neuen Hebelarmen. Beim weiteren Aufstellen der Fronthaube von der Stellung aus Fig. 5 in die 90° Position nach Fig. 6 wird vermittels der Zuglasche 5, die dann als starrer Gelenk-Stützarm wirkt, und ihrem Anlenkpunkt 5 e an der Fronthaube über den vorderen großen Hebelarm der Fronthaube eine Kraft gegen den unter Federvorspannung stehenden Scharnierträger aufgebracht, welche diesen in seine Ausgangslage nach Fig. 1 zurückdrückt und dort wieder fixiert. Die Schutzvorrichtung ist dann wieder, wie in Fig. 6 dargestellt, fixiert und die Fronthaube kann anschließend wieder auf übliche Weise verschlossen werden.

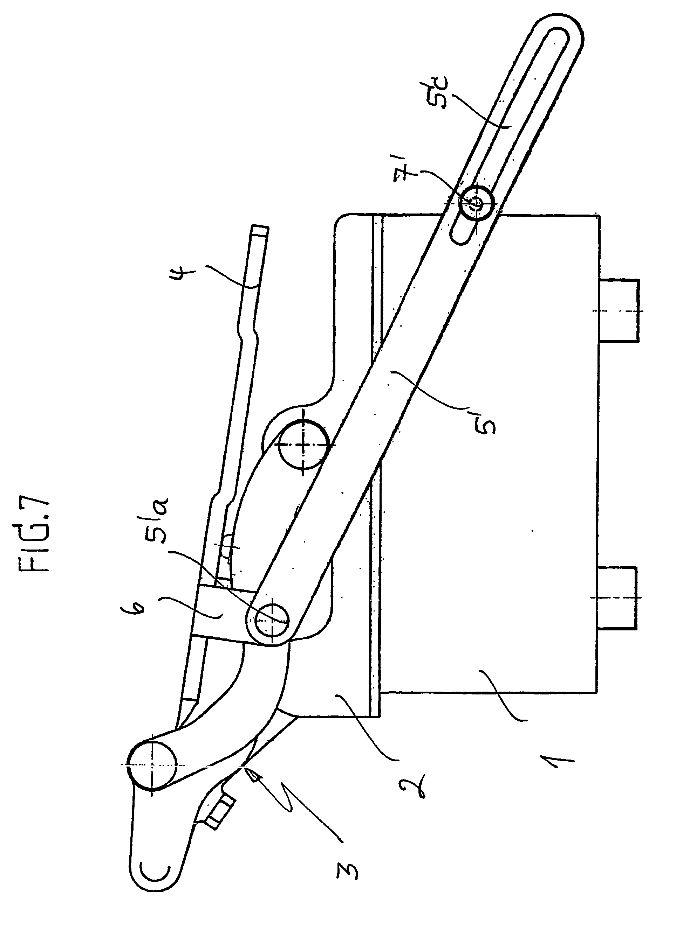

Anstelle der in den Figuren 1 - 6 dargestellten zweigeteilten Zuglasche 5 kann auch eine am Scharnierflansch 4 am Drehpunkt 5' a angelenkte einteilige Zuglasche 5' nach Fig. 7 vorgesehen werden, die ein Langloch 5' c aufweist, das in einem karosseriefest, z.B. am Aufstellgehäuse 1, angebrachten Bolzen 7' geführt ist. Die Funktion ist entsprechend derjenigen der Doppellasche. Die Reversierungsphase tritt ein, sobald das untere Ende des Langloches 5' c zum Anschlag an den karosseriefesten Bolzen 7' kommt.
Gegenüber der in den Figuren 1 - 6 dargestellten Version mit einer zusammenschiebbaren Doppellasche ragt jedoch bei der alternativen Ausführungsform die einteilige Zuglasche 5' im Grundzustand relativ tief in den Vorderwagen, typischerweise den Motorraum, was ggf. störend sein kann.

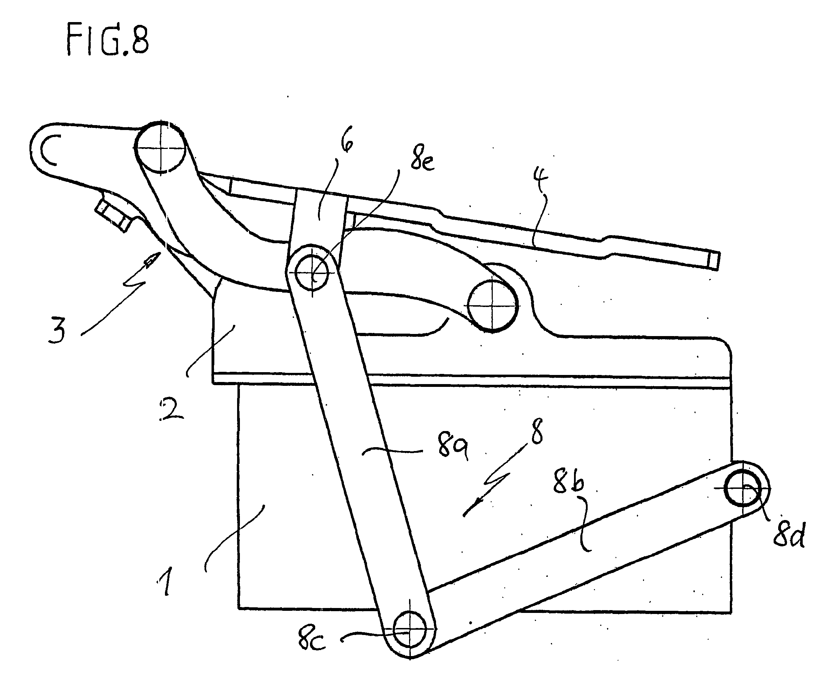

Anstelle der in den Figuren 1 - 6 dargestellten Doppellasche 5 mit Langloch als verzögerungsfrei ausziehbarem Zug-Stab kann auch eine Doppellasche in geknickter Ausführung, d.h. in Form von zwei drehgelenkig miteinander verbundenen Laschen vorgesehen werden. Die Figuren 8 - 12 zeigen eine derartige Ausführung. Die mit der Ausführung nach Fig. 1 - 6 identischen Teile sind dabei mit denselben Bezugsziffern versehen. Der alternative Zug-Stab in Form einer Doppellasche 8 besteht aus zwei Laschen 8 a, 8 b, die im Drehpunkt 8 c mit üblichen Mitteln (Bolzen, Niet, Schraube etc) drehbeweglich miteinander verbunden sind. Das freie Ende der unteren Lasche 8 b ist im Drehpunkt 8 d drehbeweglich an der Karosse und das freie Ende der oberen Lasche 8 a ist im Drehpunkt 8 e drehbeweglich am Scharnierflansch 4 bzw. am zugehörigen Befestigungswinkel 6 angelenkt.

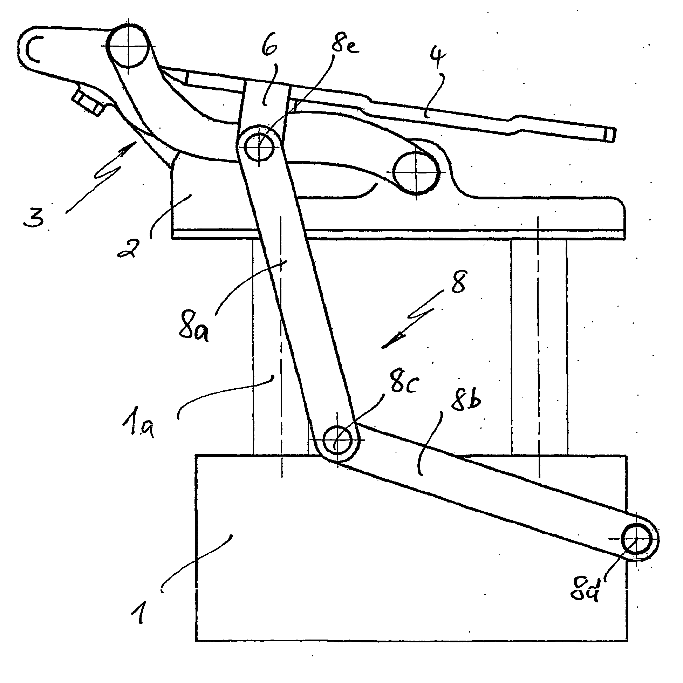

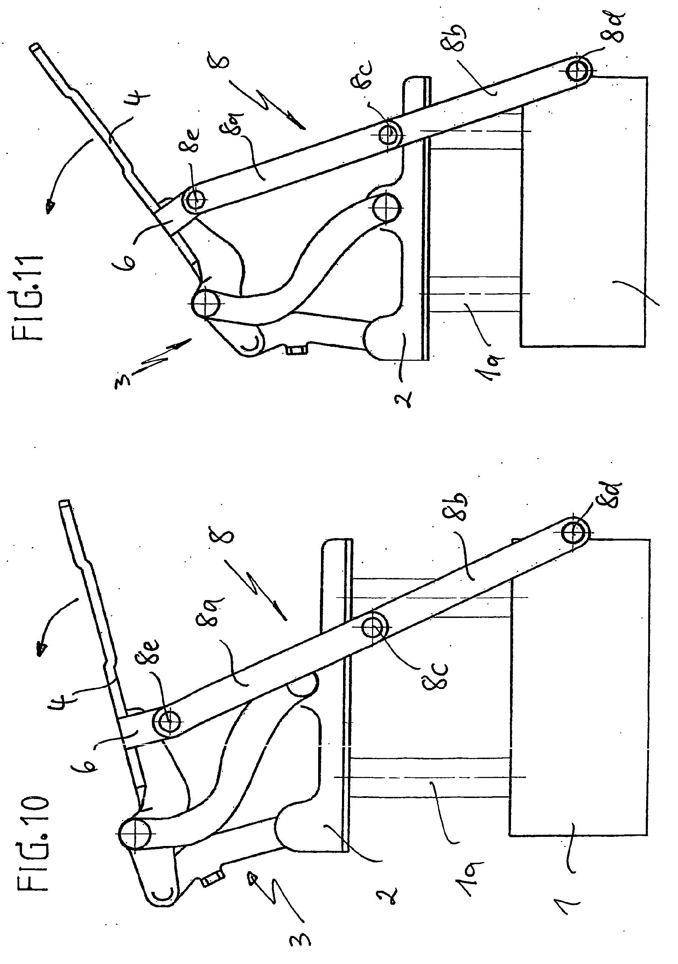

In der Grundstellung ist die Doppellasche 8 gefaltet und nimmt daher relativ wenig Raum ein. Wird der Scharnierträger 2 sensorgesteuert aufgestellt, dann wird, wie die Fig. 9 zeigt, die Doppellasche etwas "entfaltet", wobei dieses Entfalten dem Aufstellvorgang verzögerungsfrei folgt. Zum Reversieren der Aufstell-Vorrichtung wird die Fronthaube, analog dem Reversieren nach den Figuren 4 - 6 zunächst soweit geöffnet, bis die Entfaltung vollständig ist, d.h. beide Laschen 8 a, 8 b eine Linie bilden (Fig. 10). Bis zu dieser Stellung ist die Zug-Doppellasche 8 noch ohne Funktion.

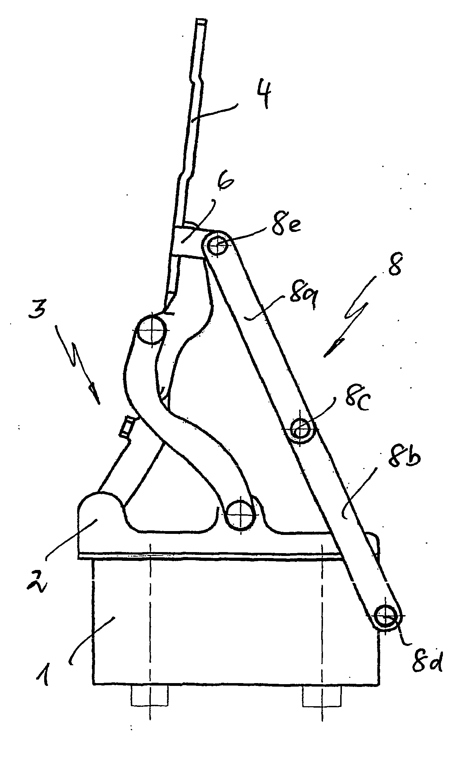

Beim weiteren Aufschwenken der Fronthaube wirkt die Doppellasche 8 analog der Doppellasche 5 in den Figuren 1 - 6 als starrer Gelenkarm mit einem neuen Drehpunkt 8 e, so dass das Scharnier 3 mit dem Scharnierträger 2 niedergedrückt wird (Fig. 11), bis bei Erreichen der 90°-Werkstattstellung (Fig. 12) der Scharnierträger 2 wieder vollständig reversiert worden ist, d.h. das System nach Schließen der Fronthaube wieder die Grundstellung nach Fig. 8 erreicht hat.

Es versteht sich, dass anstelle einer Doppellasche bei beiden Alternativen auch eine mehr als aus zwei Teilen bestehende Lasche verwendet werden kann. Bei der geknickten Ausführung nach den Figuren 8 bis 12 ist der Raumbedarf im zusammengefalteten Grundzustand umso geringer, je mehr Teile die Zug-Lasche aufweist.

Diese Überlegung zeigt, dass prinzipiell auch ein Stahlseil, ein Metallband (Litze) analog einem Masseband, oder dergleichen als "Zug-Stab" verwendet werden kann, wobei zweckmäßig geeignete Aufroll- oder Faltvorrichtungen vorgesehen sind, um das Seil, Band, Litze gezielt ein- sowie aufzurollen bzw. zu falten und entfalten.

Als weitere Alternativen zur Realisierung des Zug-Stabes ist eine Teleskop-Anordnung vorstellbar, bei der z.B. ein Rundstab mit einem kolbenartigen Ansatz in einem zylinderartigen Gehäuse verzögerungsfrei axial verschiebbar aufgenommen ist, wobei der Rundstab mit seinem freien Ende am Scharnierflansch (bzw. der Fronthaube) und das zylinderartige Gehäuse karosserieseitig drehbar angelenkt ist.

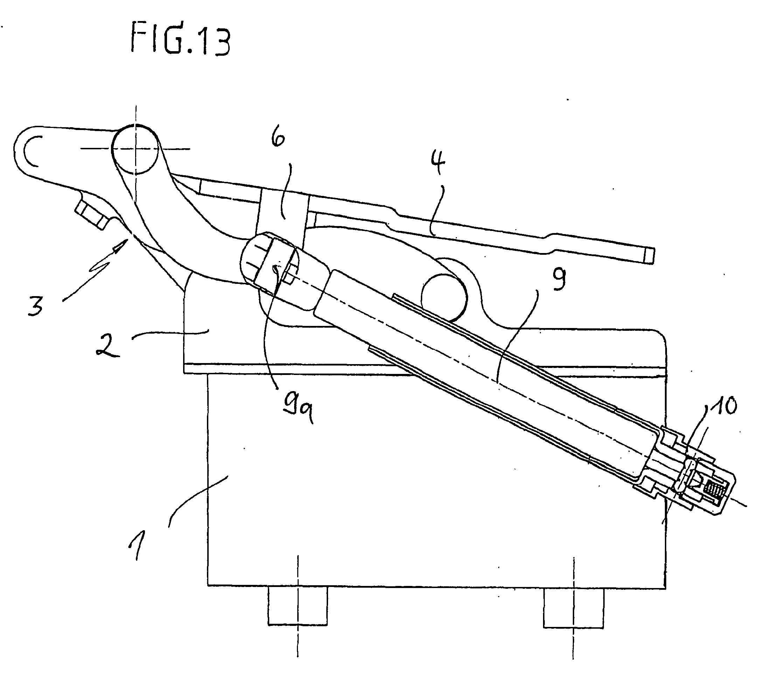

Die Figuren 13-18 zeigen eine weitere Ausführungsform eines Zug-Stabes in Form einer ausziehbaren Gasdruckfeder, die jedoch ein auslösbares Schloß aufweist, damit sie anders als beim eingangs zitierten Stand der Technik verzögerungsfrei ausziehbar ist und den Aufstellvorgang der Schutzvorrichtung nicht dämpfend beeinträchtigt.

Auch bei der Ausführungsform des Zug-Stabes nach den Figuren 13 - 18 sind die Gleichteile zu den anderen dargestellten Ausführungsformen mit denselben Bezugsziffern versehen und brauchen daher nicht mehr erläutert zu werden.

Die Figuren 13 - 18 zeigen als Revers-Zug-Stab eine übliche Gasdruckfeder 9, wie sie als Komfort-Öffnungshilfe für Heckklappen, Fronthauben usw. im großen Umfang eingesetzt wird. Ihr Aufbau und ihre Wirkungsweise ist bekannt und braucht daher hier nicht näher erläutert zu werden. Die Gasdruckfeder 9 ist mit ihrem oberen Ende 9 a fest, aber drehbeweglich, an dem die Fronthaube tragenden Scharnierflansch 4 befestigt. Das untere Ende ist über eine im Crash-Fall lösbare Verbindung, im dargestellten Beispiel ein Kugelschloß 10, karosseriefest, jedoch drehbeweglich angelenkt.

Derartige lösbare Verbindungen, so auch das Kugelschloß, sind aus der Technik der Überrollbügel bekannt und brauchen daher hier ebenfalls nicht näher erläutert zu werden. So ist beispielsweise das Kugelschloß bekannt aus der DE 37 32 561 C2, die hiermit durch Bezugnahme mit zum Gegenstand der Offenbarung gemacht wird. Diese lösbare Verbindung macht die Verwendung einer Gasdruckfeder als Revers-Zug-Stab in der Praxis erst möglich. Denn eine konventionelle Gasdruckfeder hat für den vorliegenden Zweck den entscheidenden Nachteil ihrer Trägheit. Sie würde bei einer plötzlichen Aufstellung der Fronthaube innerhalb der geforderten, im ms-Bereich liegenden Aufstellzeit bremsend wirken. Die Abkopplung des hydraulich pneumatischen Teils der Gasdruckfeder ermöglicht es, die geforderte Aufstellzeit einzuhalten.

Die Fig. 13 zeigt die Lage der Gasdruckfeder mit Schloß im Grundzustand, d.h. die Fronthaube ist geschlossen und die Unfall-Schutzvorrichtung ist nicht aufgestellt.

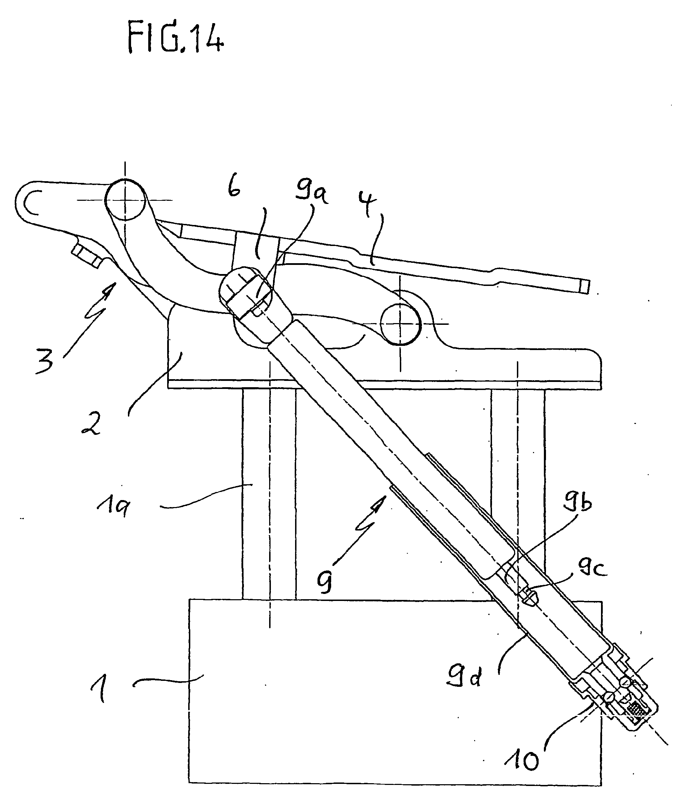

Bei einer Crash- oder Sicherheitsauslösung wird sensorgesteuert die Unfall-Schutz-Vorrichtung im Gehäuse 1 und zugleich das Kugelschloß 10 aktiviert. Die zugehörigen Einrichtungen sind bekannt und brauchen hier nicht näher beschrieben zu werden. Dadurch wird der Scharnierträger 2, wie in Fig. 14 dargestellt, um den vorgegebenen Hub aufgestellt. Zugleich wird die Fixierung der Kolbenstange 9 b in der Gasdruckfeder durch Freigabe des an ihr angebrachten Zapfens 9 c aufgehoben, d.h. Gasdruckfeder und zugehöriges Führungsrohr 9 d werden auseinandergezogen. Wie die Fig. 14 zeigt, hat bei einem eventuellen Aufprall einer Person auf die Fronthaube die Gasdruckfeder keine kraftschlüssige Verbindung mit der Karosse und kann somit den HIC-Wert, ein Maß für die Verletzungsschwere, nicht negativ beeinflussen.

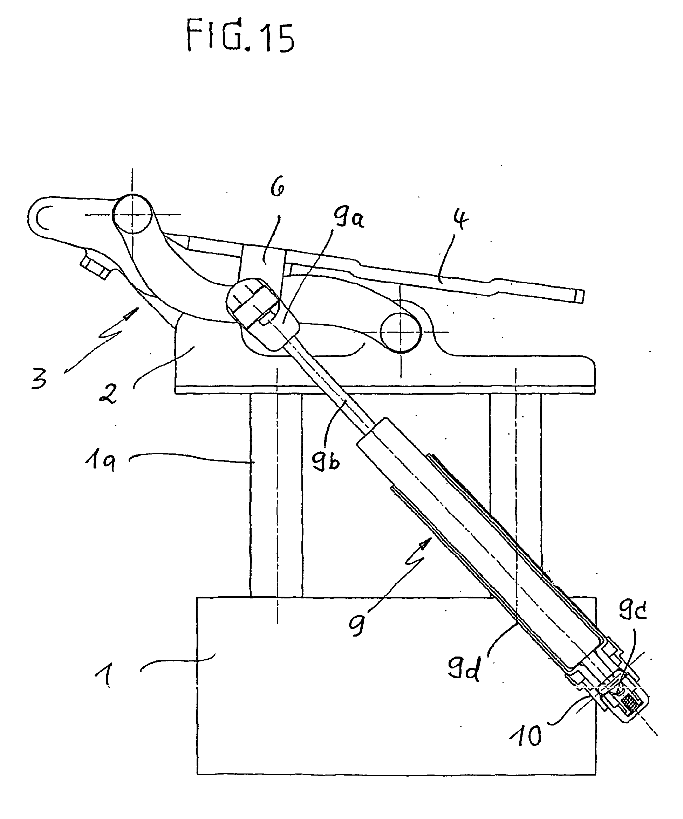

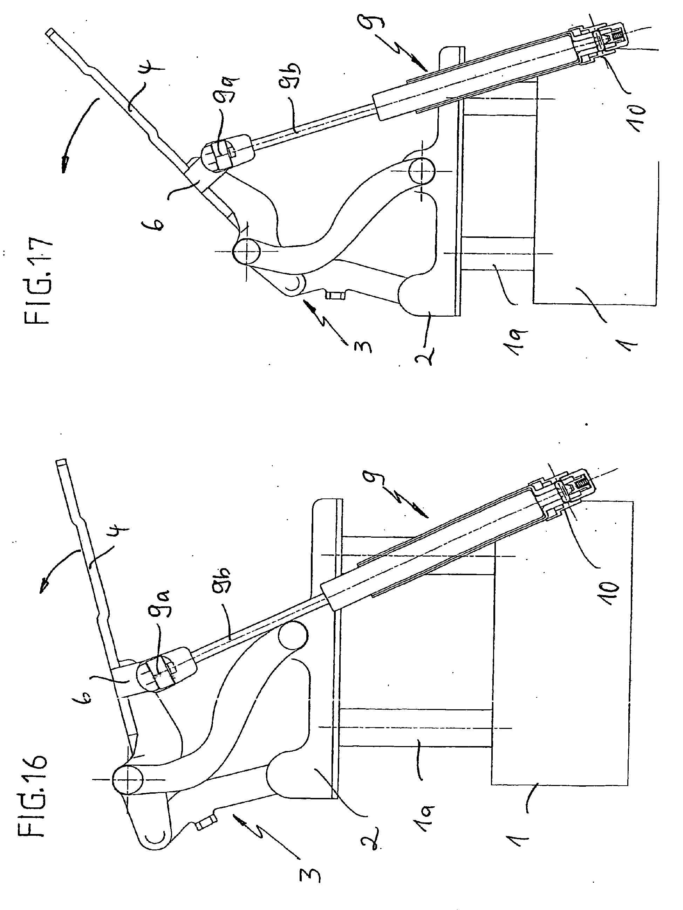

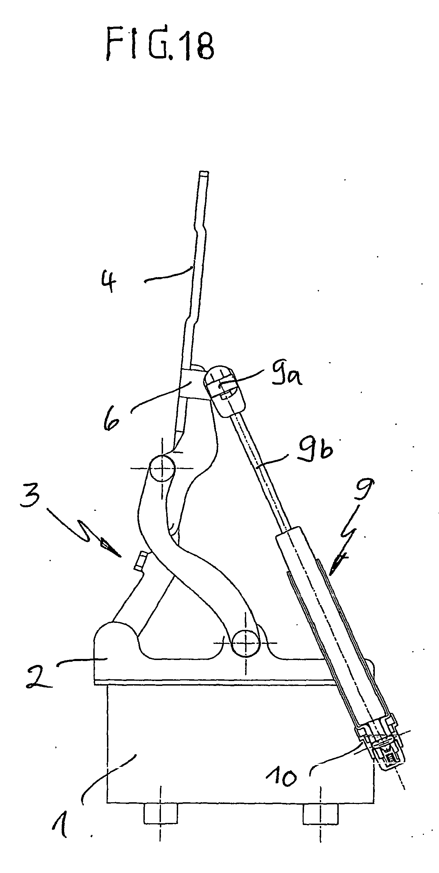

Nach Ablauf von ca. 3 - 5 Sekunden nach dem Auslösen des Kugelschlosses 10 ist die Kolbenstange 9 b weiter ausgefahren und wieder mit dem Zapfen 9 c im Kugelschloß 10 zentriert und arretiert. Diesen Zustand zeigt die Figur 15. Damit ist wieder eine kraftschlüssige Verbindung zwischen Fronthaube und Karosserie hergestellt, die für den in den Figuren 16 - 18 dargestellten Reversiervorgang erforderlich ist. Zum Reversieren wird, wie bei den anderen Ausführungsformen, die Haube geöffnet und die Gasdruckfeder weiter ausgezogen (Fig. 16), bis sie die maximale Auszugslänge erreicht hat. Beim weiteren Öffnen der Fronthaube wirkt dann die Gasdruckfeder 9 als starrer Hebel-Zugarm mit dem Anlenkpunkt 9 a als neuer Drehpunkt, wodurch über das Scharnier 3 der zugehörige Scharnierträger 2 niedergedrückt und damit die Unfall-Schutzvorrichtung im Gehäuse 1 reversiert wird. Die Fig. 17 zeigt dabei den Beginn der Reversierbewegung, die bei Erreichen der 90°-Stellung nach Fig. 18 abgeschlossen ist.

## Patentansprüche

1. Einrichtung zum manuellen Reversieren einer Vorrichtung (1, 1 a) zum Schutz von Personen bei einem Frontalaufprall auf ein Kraftfahrzeug, welches eine den Vorderwagen abdeckende Fronthaube aufweist, die windschutzscheibenseitig an beiden Fahrzeugseiten jeweils über ein Scharnier (3) mittelbar drehbeweglich an der Karosse des Vorderwagens angelenkt ist, indem das Scharnier (3) jeweils auf einem Scharnierträger (2) angelenkt ist, der seinerseits in der Schutz-Vorrichtung (1, 1 a), die karosseriefest angebracht ist, und einen Federspeicher in Verbindung mit einer sensorgesteuert auslösbaren Haltevorrichtung aufweist, aufstellbar angebracht ist, derart, dass im Normalzustand der Scharnierträger (2) niedergehalten ist und im Kollisionsfall sensorbetätigt für eine begrenzte Aufstellbewegung unter Anhebung der Fronthaube im Scharnierbereich freigebbar ist, wobei die Reversier-Einrichtung in eingebautem Zustand ein fest montiertes,auf eine vorgegebene Länge ausziehbares Revers-Element aufweist, welches im Scharnierbereich einerseits an der Fronthaube und andererseits karosseriefest drehbeweglich angelenkt ist, derart, dass bei Erreichen eines vorgegebenen Öffnungswinkels der Fronthaube das Revers-Element (5, 8, 9) seine maximale Auszugslänge erreicht und beim weiteren Öffnen der Fronthaube der Anlenkpunkt des Revers-Elementes an der Fronthaube einen neuen Drehpunkt für die Fronthaube bildet, und durch Nutzung der Fronthaube als zweiarmigen Hebel unter Einleiten einer Handkraft am vorderen langen Hebel und Erzeugen einer Wirkkraft am scharnierseitigen kurzen Hebelarm ein aufgestellter Scharnierträger (2) und damit die ausgelöste Schutz-Vorrichtung (1, 1 a) reversierbar ist, **dadurch gekennzeichnet, dass** das Revers-Element als verzögerungsfrei auf die vorgegebene Länge ausziehbarer Zug-Stab (5, 8, 9) ausgebildet ist.

2. Einrichtung nach Anspruch 1, mit Scharnieren (3), die jeweils einen angelenkten Scharnierflansch (4) für die Befestigung der Fronthaube aufweisen, **dadurch gekennzeichnet, dass** der Zug-Stab (5, 8, 9) einerseits über einen Befestigungswinkel (6) drehbeweglich an dem Scharnierflansch (4) und damit mittelbar an der Fronthaube sowie andererseits an der karosseriefest angebrachten Schutz-Vorrichtung (1, 1a) drehbeweglich angelenkt ist.

3. Einrichtung nach Anspruch 1 oder 2, **dadurch gekennzeichnet, dass** als verzögerungsfrei ausziehbarer Zug-Stab eine einteilige Zuglasche (5') mit Langloch (5' c) vorgesehen ist, die am langlochabgewandten Ende fronthaubenseitig drehbeweglich angelenkt ist und im Langloch (5' c) mittels eines karosseriefest angebrachten Bolzens (7') drehbeweglich und axial ausziehbar angelenkt ist.

4. Einrichtung nach Anspruch 1 oder 2, **dadurch gekennzeichnet, dass** als verzögerungsfrei ausziehbarer Zug-Stab eine aus zwei Laschen bestehende Doppellasche (5, 8) vorgesehen ist, wobei die eine Lasche fronthaubenseitig und die andere karosserieseitig drehbeweglich angelenkt ist, und beide Laschen ausziehbar miteinander verbunden sind.

5. Einrichtung nach Anspruch 4, **dadurch gekennzeichnet, dass** die beiden Laschen (5 a, 5 b) überlappend axial fluchtend und gegenseitig linear verschiebbar miteinander verkoppelt sind, mit einem Langloch (5 c) in einer Lasche (5 a) und einem das Langloch (5 c) durchdringenden Verbindungselement (7) an der anderen Lasche (5 b).

6. Einrichtung nach Anspruch 4, **dadurch gekennzeichnet, dass** die beiden Laschen (8 a, 8 b) an ihren freien Enden drehgelenkig miteinander verbunden sind.

7. Einrichtung nach Anspruch 1 oder 2, **dadurch gekennzeichnet, dass** als verzögerungsfrei ausziehbarer Zug-Stab ein metallisches Seil oder Band oder eine metallische Litze vorgesehen ist.

8. Einrichtung nach Anspruch 1 oder 2, **dadurch gekennzeichnet, dass** als verzögerungsfrei ausziehbarer Zug-Stab eine Gasdruckfeder (9) mit zugleich mit der Haltevorrichtung in der Schutzvorrichtung (1, 1a) sensorgesteuert auslösbarem Schloß vorgesehen ist, wobei ein Ende fronthaubenseitig drehbeweglich und das andere Ende über das Schloß karosserieseitig angelenkt ist.

9. Einrichtung nach Anspruch 8, **dadurch gekennzeichnet, dass** als auslösbares Schloß ein Kugelschloß (10) in Verbindung mit einem Schließzapfen (9 c) am beweglichen Teil der Gasdruckfeder.

## Claims

1. An arrangement for manually reversing a device (1, 1a) for the protection of persons in a head-on collision with a motor vehicle having a bonnet covering the front end of the car, which bonnet at the windscreen end at both sides of the vehicle is indirectly rotatably hinged via a respective hinge (3) to the body of the front end of the car, in that each hinge (3) is hinged to a respective hinge carrier (2), which in turn is mounted so as to be liftable in the protective device (1, 1a), the protective device being fixedly mounted on the car body and having a stored-energy spring mechanism connected to a sensor-controlled, releasable holding device, such that in the normal state the hinge carrier (2) is held down and in a collision is releasable under sensor-control for a limited movement into a raised-up position to raise the bonnet in the hinge region, wherein, in the installed state, the reversing arrangement comprises a fixedly mounted reversing element extendable to a predetermined length, which in the hinge region is rotatably hinged at one end to the bonnet and at the other end to the car body such that, when a predetermined opening angle of the bonnet is reached, the reversing element (5, 8, 9) reaches its maximum extended length and, on further opening of the bonnet, the articulation point of the reversing element on the bonnet forms a new centre of rotation for the bonnet, and by using the bonnet as a two-armed lever and applying a manual force at the front long lever and generating an effective force at the hinge-side short lever arm, a raised hinge carrier (2), and hence the released protective device (1, 1a), is reversible, **characterised in that** the reversing element is in the form of a tension rod (5, 8, 9) instantly extendable to the predetermined length.

2. An arrangement according to claim 1, having hinges (3) that each comprise an articulated hinge flange (4) for securing the bonnet, **characterised in that** at one end the tension rod (5, 8, 9) is rotatably articulated via an angle bracket (6) at the hinge flange (4) and hence indirectly at the bonnet, and at the other end is rotatably articulated at the protective device (1, 1a) fixed to the car body.

3. An arrangement according to claim 1 or 2, **characterised in that** a one-piece tension stay (5') having a slot (5'c) is provided as an instantly extendable tension rod, which at its end remote from the slot is rotatably articulated at the bonnet and in the slot (5'c) is articulated so as to rotate and be axially extendable by means of a bolt (7') fixed to the car body.

4. An arrangement according to claim 1 or 2, **characterised in that** a double stay (5, 8) comprising two stays is provided as an instantly extendable tension rod, the one stay being rotatably articulated at the bonnet and the other being rotatably articulated at the car body, and both stays being connected to one another so as to be extendable.

5. An arrangement according to claim 4, **characterised in that** the two stays (5a, 5b) are coupled to one another so that they overlap axially in alignment and are mutually rectilinearly displaceable, one stay (5a) having a slot (5c) and the other stay (5b) having a connecting element (7) passing through the slot (5c).

6. An arrangement according to claim 4, **characterised in that** the two stays (8a, 8b) are pivotally connected with one another at their free ends.

7. An arrangement according to claim 1 or 2, **characterised in that** a metal cable or band or a metal wire is provided as an instantly extendable tension rod.

8. An arrangement according to claim 1 or 2, **characterised in that** a pneumatic spring (9) is provided as an instantly extendable tension rod, having a lock releasable under sensor control simultaneously with the holding device in the protective device (1, 1a), one end being rotatably articulated at the bonnet and the other end being articulated via the lock at the car body.

9. An arrangement according to claim 8, **characterised in that** a ball lock (10) in combination with a lock pin (9c) on the moving part of the pneumatic spring is provided as the releasable lock.

## Revendications

1. Dispositif pour renverser manuellement un système (1, la) de protection des personnes lors d'un choc frontal sur un véhicule automobile qui présente un capot avant qui recouvre l'avant du véhicule et qui, du côté du pare-brise, est indirectement articulé à rotation à la carrosserie de l'avant du véhicule par l'intermédiaire d'une charnière respective (3) de chaque côté du véhicule, par le fait que la charnière (3) est respectivement articulée sur un porte-charnière (2) qui est lui-même installé, dans le système de protection (1, la) qui est fixé à la carrosserie et présente un accumulateur à ressort conjointement avec un dispositif de retenue libérable en étant commandé par capteur, avec possibilité de relèvement de telle sorte que le porte-charnière (2) est enfoncé dans l'état normal et peut en cas de collision, en étant actionné par capteur, être libéré pour un mouvement de relèvement limité accompagné d'un soulèvement du capot avant dans la région de la charnière, sachant que le dispositif de renversement présente, dans l'état installé, un élément de renversement monté fixement et pouvant être déployé à une longueur prédéfinie, élément qui est articulé à rotation dans la région de la charnière d'une part sur le capot avant et d'autre part d'une manière solidaire de la carrosserie, de telle sorte que l'élément de renversement (5, 8, 9) atteint sa longueur maximale de déploiement à l'atteinte d'un angle d'ouverture prédéfini du capot avant et qu'en cas de poursuite de l'ouverture du capot avant, le point d'articulation de l'élément de renversement sur le capot avant forme un nouveau pivot pour le capot avant et, en utilisant le capot avant comme levier à deux bras par l'exercice d'une force manuelle sur le levier long avant et la production d'une force active sur le bras de levier court côté charnière, on peut renverser un porte-charnière (2) relevé et donc le système de protection (1, la) déclenché, **caractérisé en ce que** l'élément de renversement est réalisé sous la forme d'une barre de traction (5, 8, 9) pouvant être déployée sans temporisation à la longueur prédéfinie.

2. Dispositif selon la revendication 1, avec des charnières (3) qui présentent chacune une bride de charnière articulée (4) pour la fixation du capot avant, **caractérisé en ce que** la barre de traction (5, 8, 9), d'une part est articulée à rotation à la bride de charnière (4) par l'intermédiaire d'une équerre de fixation (6), et donc indirectement au capot avant, et d'autre part est articulée à rotation au système de protection (1, la) fixé à la carrosserie.

3. Dispositif selon la revendication 1 ou 2, **caractérisé en ce que**, comme barre de traction pouvant être déployée sans temporisation, il est prévu une patte de traction (5') d'un seul tenant pourvue d'un trou oblong (5'c), qui est articulée à rotation du côté du capot avant, à l'extrémité opposée au trou oblong, et qui est articulée à rotation et avec possibilité de déploiement axial dans le trou oblong (5'c) au moyen d'un axe (7') fixé à la carrosserie.

4. Dispositif selon la revendication 1 ou 2, **caractérisé en ce que**, comme barre de traction pouvant être déployée sans temporisation, il est prévu une patte double (5, 8) constituée de deux pattes, l'une des pattes étant articulée à rotation du côté du capot avant et l'autre du côté de la carrosserie, et les deux pattes étant mutuellement reliées avec possibilité de déploiement.

5. Dispositif selon la revendication 4, **caractérisé en ce que** les deux pattes (5a, 5b) sont mutuellement accouplées, en se recouvrant axialement en alignement et avec possibilité de translation linéaire l'une par rapport à l'autre, par un trou oblong (5c) dans une patte (5a) et, sur l'autre patte (5b), un élément de liaison (7) traversant le trou oblong (5c).

6. Dispositif selon la revendication 4, **caractérisé en ce que** les deux pattes (8a, 8b) sont mutuellement reliées à leurs extrémités libres en étant articulées à rotation.

7. Dispositif selon la revendication 1 ou 2, **caractérisé en ce que**, comme barre de traction pouvant être déployée sans temporisation, il est prévu un câble ou une bande métallique, ou un toron métallique.

8. Dispositif selon la revendication 1 ou 2, **caractérisé en ce que**, comme barre de traction pouvant être déployée sans temporisation, il est prévu un ressort de compression à gaz (9) avec un fermoir pouvant être libéré en étant commandé par capteur en même temps que le dispositif de retenue du système de protection (1, 1a), une extrémité étant articulée à rotation du côté du capot avant et l'autre extrémité étant articulée du côté de la carrosserie par l'intermédiaire du fermoir.

9. Dispositif selon la revendication 8, **caractérisé en ce que**, comme fermoir libérable, un verrou sphérique (10) relié à un tenon de fermeture (9c) est prévu sur la partie mobile du ressort de compression à gaz.
